# EUROPEAN PATENT APPLICATION

(11) **EP 3 284 954 A1**
(43) Date of publication of application: **21.02.2018**
(21) Application number: 16461549.4
(22) Date of filing: 16.08.2016
(51) Int. Cl.: F15B 13/043, F16K 31/00

(54) **SERVOVALVE**

(71) Applicant: Hamilton Sundstrand Corporation, Charlotte, NC 28277 (US)
(72) Inventor: Kozlowski, Piotr, 39-300 Mielec (PL); Sawicki, Piotr, 66-450 Bogdaniec (PL)
(74) Representative: Hughes, Andrea Michelle

(57) **Abstract**

A servovalve comprising: a fluid transfer valve assembly 2 comprising a supply fluid port 4 and a control port 5; and a moveable valve member 8,8a arranged to regulate flow of fluid from the supply fluid port 4 to the control port 5 in response to a control signal; wherein the fluid transfer valve assembly 2 comprises a housing 3 in which the supply fluid port 4 and the control port 5 are formed, and an insert 11 positioned in the housing 3 into which the moveable valve member 8,8a extends and in which a fluid flow path is formed between the supply fluid port 4 and the control port 5, wherein the moveable valve member 8,8a regulates the fluid flow by varying the size of the fluid flow path in response to the control signal; and wherein the fluid flow path is defined by two supply orifices 9 formed in the insert 11 in communication with the supply fluid port 4, arranged such that the fluid flow from the supply fluid port 4 is provided to two sides of the moveable valve member to provide a balanced fluid pressure to the valve member.

## Description

### TECHNICAL FIELD

The present disclosure relates to servovalves used to transfer quantities of, or manage the flow of fluid e.g. air.

### BACKGROUND

Servovalves find a wide range of applications for controlling air or other fluid flow to effect driving or control of another part e.g. an actuator.

A servovalve assembly includes a motor controlled by a control current which controls flow to an air valve to control an actuator. Generally, a servovalve transforms an input control signal into movement of an actuator cylinder. The actuator controls e.g. an air valve. In other words, a servovalve acts as a controller, which commands the actuator, which changes the position of an air valve's (e.g. a so-called butterfly valve's) flow modulating feature.

Such mechanisms are used, for example, in various parts of aircraft where the management of air/fluid flow is required, such as in engine bleeding systems, antiice systems, air conditioning systems and cabin pressure systems. Servovalves are widely used to control the flow and pressure of pneumatic and hydraulic fluids to an actuator.

Conventionally, servovalve systems operate by obtaining pressurised fluid from a high pressure source which is transmitted through a load from which the fluid is output as a control fluid. Various types of servovalves are known - see e.g. GB 2104249, US 2015/0047729 and US 9,309,900.

Electrohydraulic servovalves can have a first stage with a motor, e.g. an electrical or electromagnetic force motor controlling flow of a hydraulic fluid to drive a valve member e.g. a spool valve of a second stage, which, in turn, can control flow of hydraulic fluid to an actuator for driving a load. The motor can operate to position a moveable member, such as a flapper, in response to an input drive signal or control current, to drive the second stage valve member e.g. a spool valve.

Particularly in aircraft applications, but also in other applications, servovalves are often required to operate at various pressures and temperatures. For e.g. fast acting air valve actuators, relatively large flows are required depending on the size of the actuator and the valve slew rate. For such high flow rates, however, large valve orifice areas are required. For 'flapper' type servovalves, problems arise when dealing with large flows due to the fact that flow force acts in the direction of the flapper movement and the motor is forced to overcome the flow forces. For clevis-like metering valves such as described in US 4,046,061 and US 6,786,238, the flow forces, proportional to the flow, act simultaneously in opposite directions so that the clevis is balanced and centered. The clevis, however, needs to be big due to the requirement for bigger orifices to handle larger flows.

There is a need for a servovalve arrangement that can handle large fluid flows effectively, whilst retaining a compact design.

The present invention provides a servovalve comprising: a fluid transfer valve assembly comprising a supply fluid port and a control port; and a moveable valve member arranged to regulate flow of fluid from the supply fluid port to the control port in response to a control signal; wherein the fluid transfer valve assembly comprises a housing in which the supply fluid port and the control port are formed, and an insert positioned in the housing into which the moveable valve member extends and in which a fluid flow path is formed between the supply fluid port and the control port, wherein the moveable valve member regulates the fluid flow by varying the size of the fluid flow path in response to the control signal; and wherein the fluid flow path is defined by two supply orifices formed in the insert in communication with the supply fluid port, arranged such that the fluid flow from the supply fluid port is provided to two sides of the moveable valve member to provide a balanced fluid pressure to the valve member.

Preferably, the fluid transfer valve assembly further comprises a return port in fluid communication with the fluid flow path via two return orifices such that the fluid flow from the return port is provided to two sides of the moveable valve member to provide a balanced fluid pressure to the valve member.

The moveable valve member is preferably an elongate member having a first end arranged for driving connection with a motor and a second end located in the insert adjacent the control port in the fluid flow path.

Preferably, the second end of the moveable valve member is larger than the first end.

Preferred embodiments will now be described with reference to the drawings.

### BRIEF DESCRIPTION OF THE DRAWINGS

Fig. 1 is a cross-sectional view of a servovalve according to the disclosure.
Fig. 2 is a planar cross-section showing the flapper relative to the orifices.
Fig. 3 is a perspective view of a servovalve according to the disclosure.
Fig. 4 shows the flapper of Fig. 2.
Fig. 5 is an alternative cross-sectional view of a servovalve according to the disclosure.
Fig. 6 shows a flapper in a 'closed' position.
Fig. 7 shows the flapper in an 'opened' position.
Fig. 8 is a detail view of the flapper and orifices in the opened position.
Fig. 9 is a plan view of Fig. 8

### DETAILED DESCRIPTION

With reference to all of the drawings, the preferred embodiment comprises, in brief, a servovalve assembly have a torque motor 1 and a pneumatic subsystem assembly 2. The pneumatic assembly consists of a servovalve housing 3 having three ports: a supply port 4, a control port 5, and a return port 6. Flow is possible between the three ports via a passage 7 drilled from the side of the housing which is plugged or sealed after it has been drilled. The torque motor moves the flapper 8a that has an enlarged (e.g. cube-shaped) member8 at its free end. This end member 8 increases or reveals orifice flow areas or slots on the supply side 9 and decreases flow area on the return side 10, thus modulating pressure on the control port 5 and controlling the actuator (not shown). The orifice slots are machined into an insert 11 that is fitted, preferably press-fitted and, therefore sealed radially, into the servovalve housing 3. Due to the same pressure being applied simultaneously to opposite sides of the end member 8 (described further below), the flapper does not have to overcome the pressure force, nor the force of the air flow. It moves freely, modulating pressure to the actuator. To increase flow rate of the servovalve, one can increase the width and/or height of the slots and increase the size of the enlarged flapper end if required.

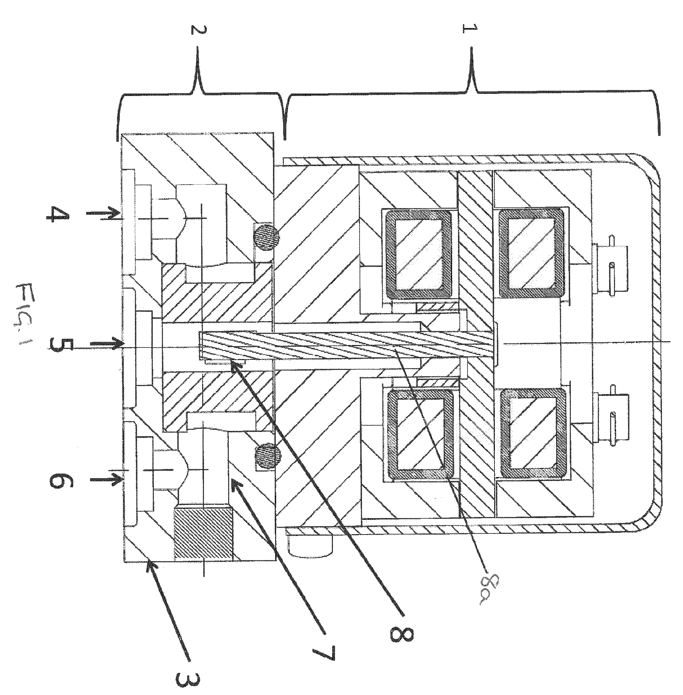

With reference to Fig. 1, in particular, the assembly is arranged to control an actuator based on the fluid flow from the control port 5 e.g. via a butterfly valve (not shown).

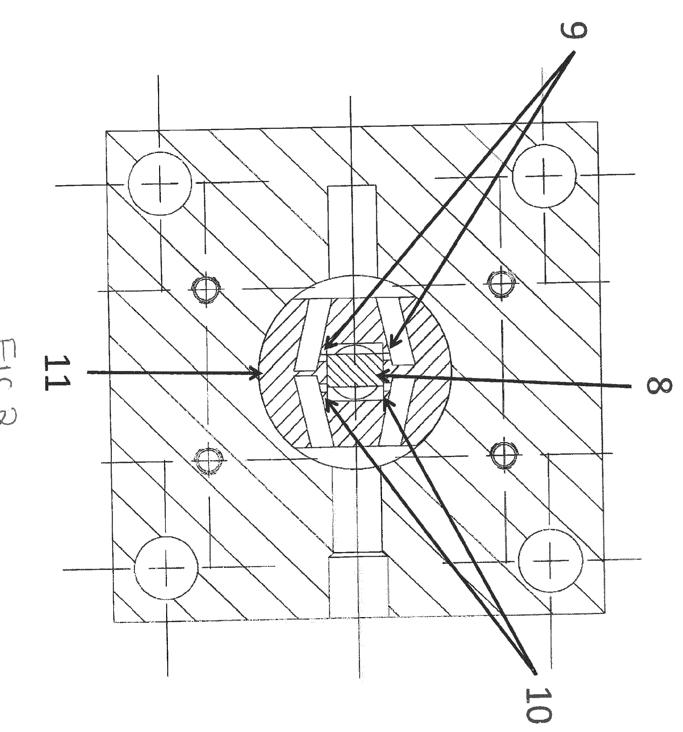

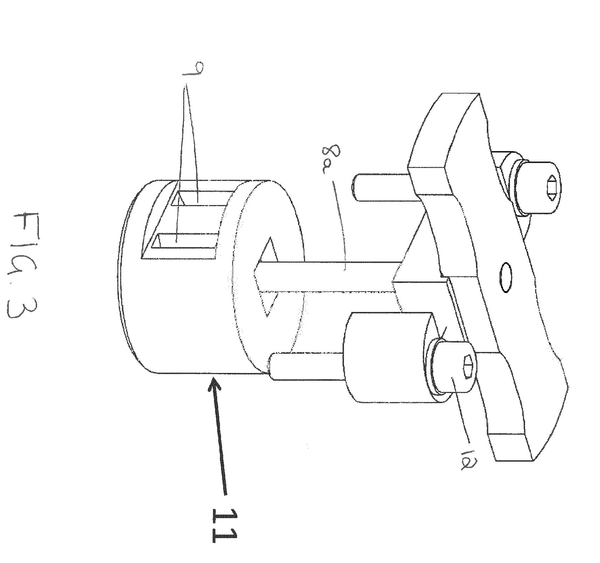

Supply pressure is provided to the servovalve housing via supply port 4. The pressure at return port 6 is atmospheric pressure which will vary depending e.g. on the altitude of the aircraft in flight. Control port 5 provides a controlled pressure, dependant on the flapper position, to be provided to an actuator. Two orifices (seen best in Figs. 2 and 3) are provided on each side of the flapper end to provide a balance of pressure on each side of the flapper.

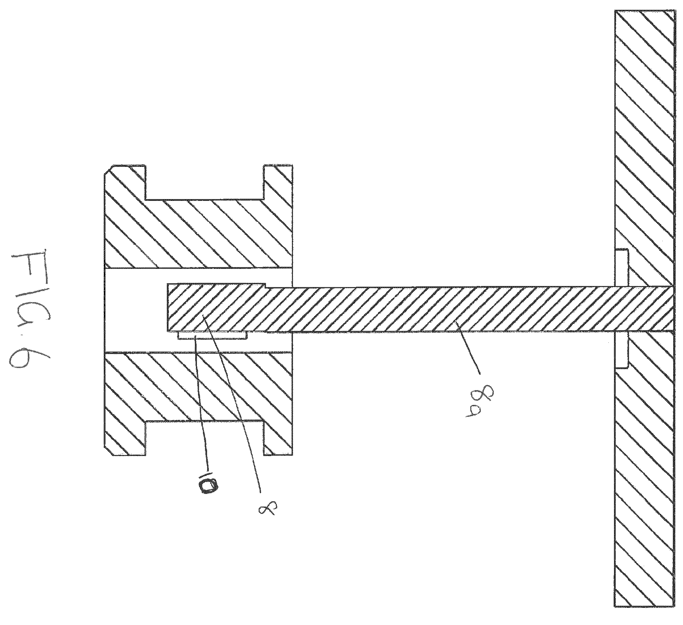

Each of the supply and return ports communicates with the control port 5 via these two orifices or slots 9,10. This ensures that equal pressure is applied to both sides of the flapper. In the closed position, the flapper 8a is driven (to the left in the drawings) to block or occlude the two slots/orifices 9 adjacent the supply port 4 and there is no flow of fluid from the supply port to the actuator via the control port. In practice there will be some leaks especially when dealing with air, but these will usually be negligible. Ambient pressure from the return port 6, via the two orifices on that side of the housing act along the side of the flapper end 8. Figs. 2 and 6 show the flapper end in the closed position.

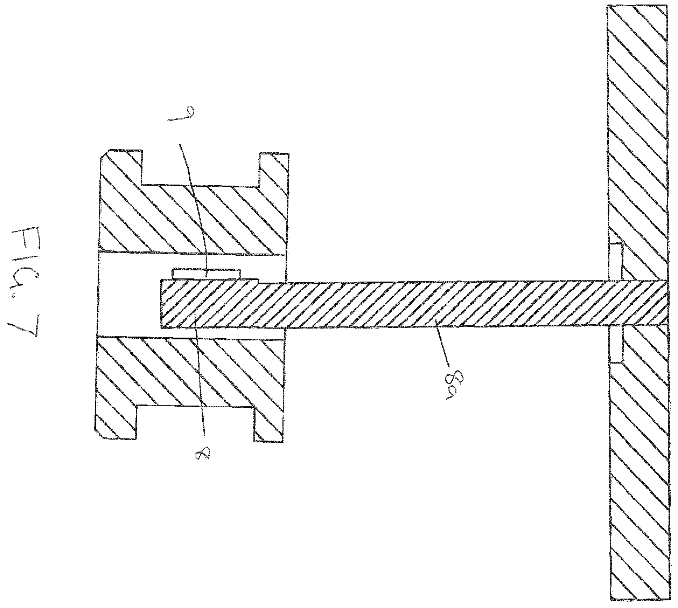

To open the servovalve, control current or a control signal drives the flapper 8a in the opposite direction (to the right in the drawings) and the flapper end 8 thus moves away from (i.e. uncovers) the supply port orifices 9 allowing fluid flow through them and through the control port 5 to drive the actuator. Figs. 7, 8 and 9 show the flapper in the opened position.

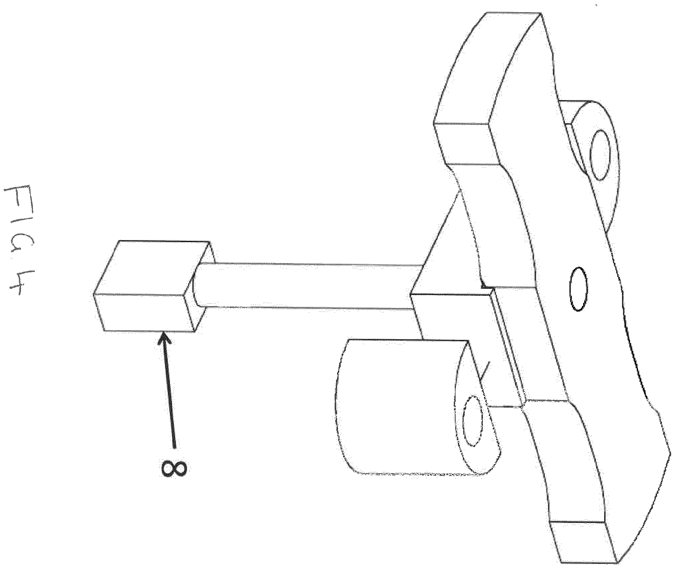

Figure 3 shows, as a perspective view, the flapper 8a and the insert 11, showing the orifices 9 on one side that communicate with one of the ports, e.g. the supply port 4. Here, it can be seen that the supply fluid will flow through the two orifices, thus resulting in a balanced pressure acting on the flapper end 8. The flapper end 8 is shown in Figure 4, which corresponds to Figure 3 but with the insert removed.

The insert 11 is preferably a modular component that can be removed and replaced. This enables different inserts with different slot/orifice sizes to be used according to the desired application. The flapper 8a is aligned with the insert 11 and the orientation of the insert need not be determined by the housing 3. Preferably, the housing 3, the insert 11 and the flapper 8,8a are made of the same material so as to avoid issues due to different thermal expansions.

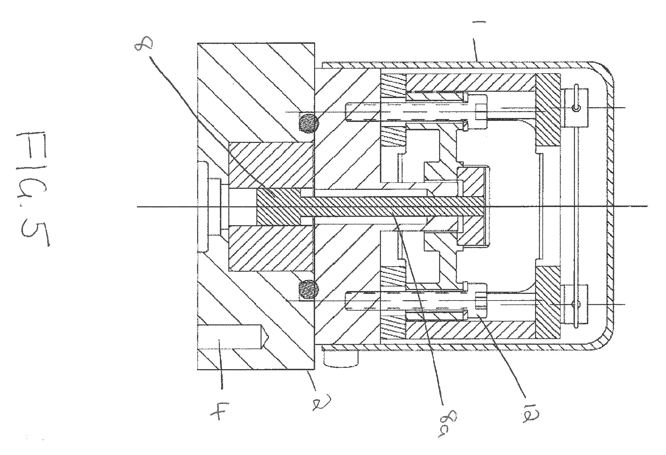

Figure 5 shows the servovalve of Figure 1 in a side view. The torque motor 1 and the pneumatic subsystem assembly 2 are, in the embodiments shown, attached together by bolts 12 although other fasteners or fastening means could, of course, be used.

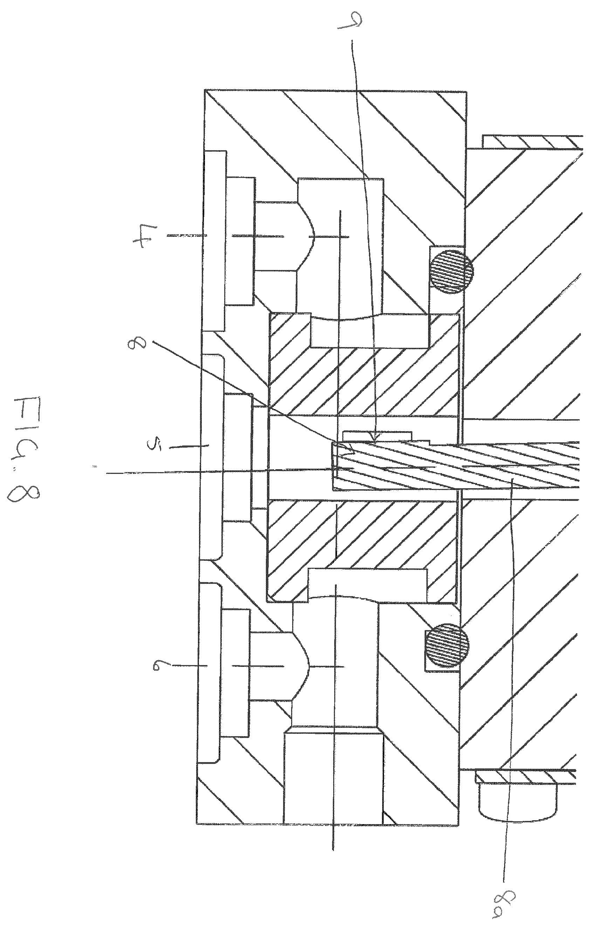

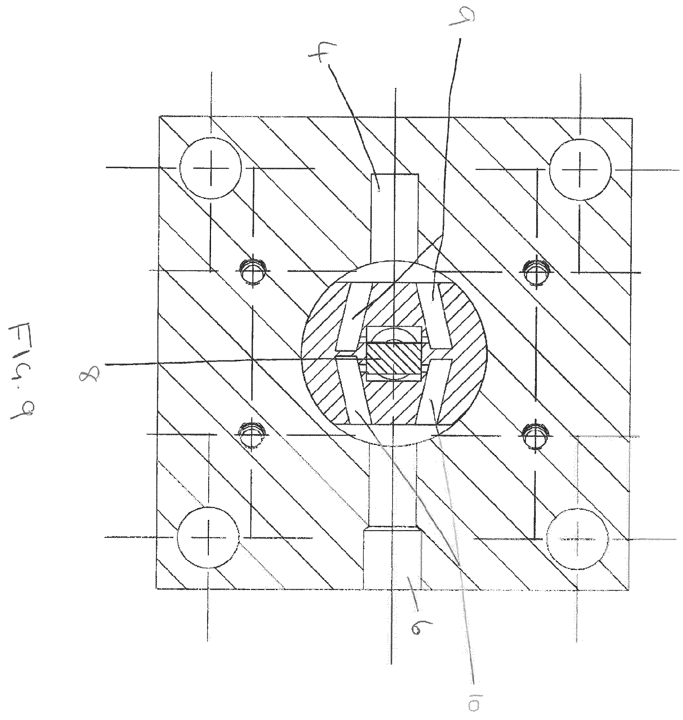

Figure 8 is a detailed view of the pneumatic subsystem assembly with the flapper in the open position where fluid from the supply port 4 can flow out via the control port 5 via the two supply port orifices 9. This is shown from a different perspective in Figure 9.

The arrangement of the disclosure is able to handle large fluid flows without requiring an increase in size of the assembly. The balanced pressure provided by the pairs of orifices means that the flapper does not need to overcome forces from pressure and flow and so can have a smaller, simpler design.

## Claims

1. A servovalve comprising:
a fluid transfer valve assembly (2) comprising a supply fluid port (4) and a control port (5); and
a moveable valve member (8,8a) arranged to regulate flow of fluid from the supply fluid port (4) to the control port (5) in response to a control signal;
wherein the fluid transfer valve assembly (2) comprises a housing (3) in which the supply fluid port (4) and the control port (5) are formed, and an insert (11) positioned in the housing (3) into which the moveable valve member (8,8a) extends and in which a fluid flow path is formed between the supply fluid port (4) and the control port (5), wherein the moveable valve member (8,8a) regulates the fluid flow by varying the size of the fluid flow path in response to the control signal; and wherein the fluid flow path is defined by two supply orifices (9) formed in the insert (11) in communication with the supply fluid port (4), arranged such that the fluid flow from the supply fluid port (4) is provided to two sides of the moveable valve member to provide a balanced fluid pressure to the valve member.

2. The servovalve of claim 1, wherein the fluid transfer valve assembly further comprises a return port (6) in fluid communication with the fluid flow path via two return orifices (10) such that the fluid flow from the return port (6) is provided to two sides of the moveable valve member to provide a balanced fluid pressure to the valve member.

3. The servovalve of claim 1 or 2, wherein the moveable valve member (8,8a) is an elongate member having a first end arranged for driving connection with a motor and a second end (8) located in the insert (11) adjacent the control port (5) in the fluid flow path.

4. The servovalve of claim 3, wherein the second end (8) of the moveable valve member is larger than the first end.

5. The servovalve of any preceding claim, further comprising a motor (1) in driving engagement with the moveable valve member.

6. The servovalve of claim 6, wherein the motor (1) is provided in a housing attached to the fluid transfer valve assembly.
